(19) **Europäisches Patentamt / European Patent Office / Office européen des brevets**

(11) **EP 4 734 620 A1**

(12) **EUROPEAN PATENT APPLICATION**
published in accordance with Art. 153(4) EPC

(43) Date of publication:
**29.04.2026   Bulletin 2026/18**

(21) Application number: **23942310.6**

(22) Date of filing: **20.06.2023**

(51) International Patent Classification (IPC):
**H04W 56/00** (2009.01)   **H04W 16/26** (2009.01)
**H04W 84/06** (2009.01)

(52) Cooperative Patent Classification (CPC):
**H04W 16/26; H04W 56/00; H04W 84/06**

(86) International application number:
**PCT/JP2023/022789**

(87) International publication number:
**WO 2024/261873 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **YOSHIOKA, Shohei**
  **Tokyo 100-6150 (JP)**
• **KURITA, Daisuke**
  **Tokyo 100-6150 (JP)**

• **NAGATA, Satoshi**
  **Tokyo 100-6150 (JP)**
• **YOU, Luhua**
  **Beijing 100190 (CN)**
• **SUN, Weiqi**
  **Beijing 100190 (CN)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **WIRELESS COMMUNICATION NODE**

(57)   A radio communication node executes radio communication with an upper node via a non-terrestrial network, and executes radio communication with a lower node. The radio communication node can determine a transmission timing of the downlink to the lower node, and determines the transmission timing based on a time difference between a reference time applied to the transmission timing and a reception timing of the downlink to the radio communication node.

FIG. 8

EP 4 734 620 A1

**Description**

TECHNICAL FIELD

The present invention relates to a radio communication node connected to a non-terrestrial network and installed on the ground.

BACKGROUND ART

The 3rd Generation Partnership Project (3GPP: registered trademark) has set specification for the 5th generation mobile communication system (5G, also called New Radio (NR) or Next Generation (NG)), and is also proceeding with the next generation specification called Beyond 5G, 5G Evolution, or 6G.

For example, in 3GPP Releases 17 and 18, regarding the use of a Non-Terrestrial Network (NTN), it is assumed that a radio base station (gNB) and a terminal (User Equipment, UE) communicate directly via a Spaceborne/Airborne means (hereinafter referred to as satellite) (Non-Patent Literature 1).

In 3GPP Release 19 (6G), it is considered that a radio communication node (IAB node) that configures an Integrated Access and Backhaul (IAB), in which radio access to the UE, and radio backhaul between radio access nodes such as gNB, are integrated, is installed on the ground, and that the UE connects to the NTN via the IAB node. As a result, the UE that does not support the NTN can also connect to the NTN via the IAB node, so that the coverage of the NTN can be effectively extended.

CITATION LIST

NON-PATENT LITERATURE

Non-Patent Literature 1: 3GPP TS 38.331 V17.4.0, 3rd Generation Partnership Project; Technical Specification Group Radio Access Network; NR; Radio Resource Control (RRC) protocol specification (Release 17), 3GPP, March 2023

SUMMARY OF INVENTION

When a UE connects to an NTN via an IAB node installed on the ground, there are problems as follows.

Specifically, it is necessary to mitigate interference of downlinks (DL) from a plurality of IAB nodes with overlapping coverage, on the UE side. Furthermore, it is also necessary to mitigate interference between a DL from a gNB (via satellite) and a DL from the IAB nodes on the UE side.

In 3GPP Releases 17 and 18, an IAB does not assume the use of an NTN, and generally a common alignment value (Timing Advance: TA) of a DL transmission timing is applied to determine a DL transmission timing by the IAB nodes. However, even if the TA is applied as is when the NTN is used, a suitable transmission timing is not obtained, and there is a concern that interference may increase.

The following disclosure has been made in view of such circumstances, and an object of the disclosure is to provide a radio communication node provided between UE and a non-terrestrial network, which can effectively mitigate interference on the UE side.

An aspect of the present disclosure provides a radio communication node (IAB node 300) including: a first communication unit (radio communication unit 310 and upper node connection unit 320) that executes radio communication with an upper node via a non-terrestrial network; a second communication unit (radio communication unit 310 and a lower node connection unit 330) that executes radio communication with a lower node; and a control unit (control unit 340) that determines a transmission timing of a downlink to the lower node. The control unit determines the transmission timing based on a time difference between a reference time applied to the transmission timing and a reception timing of a downlink to the first communication unit.

One aspect of the present disclosure provides a radio communication node (IAB node 300) including: a first communication unit (radio communication unit 310 and upper node connection unit 320) that executes radio communication with an upper node via a non-terrestrial network;

a second communication unit (radio communication unit 310, lower node connection unit 330) that executes radio communication with a lower node;

a control unit (control unit 340) that determines a transmission timing of a downlink to the lower node; wherein the control unit applies a timing alignment value including at least one of finer granularity, a shorter effective period, or a different alignment cycle when the radio communication node passes through the non-terrestrial network than when the radio communication node passes through the terrestrial network.

BRIEF DESCRIPTION OF DRAWINGS

[FIG. 1] FIG. 1 is an overall schematic block diagram of a radio communication system 10.

[Fig.2] Fig.2 is a block diagram illustrating a configuration example of radio frames, sub-frames, and slots used in the radio communication system 10.

[FIG. 3] FIG. 3 is a functional block diagram of a gNB 100 and UE 200.

[FIG. 4] FIG. 4 is a functional block diagram of an IAB node 300.

[FIG. 5] FIG. 5 is a diagram illustrating an example of DL/UL timing alignment in an NTN.

[FIG. 6] FIG. 6 is a diagram illustrating an example of timing relationship between the gNB 100 and the UE 200 when the NTN is used.

[FIG. 7] FIG. 7 is a diagram illustrating an example of a DL transmission timing of the IAB node according to Operation Example 1.

[FIG. 8] FIG. 8 is a diagram illustrating an example (part 1) of timing alignment according to Case #1 in the NTN.

[FIG. 9] FIG. 9 is a diagram illustrating an example (part 2) of timing alignment in the NTN according to Case #1.

[FIG. 10] FIG. 10 is a diagram illustrating an example of aligning DL transmission timings of IAB nodes with respect to a cell center.

[FIG. 11] FIG. 11 is a diagram illustrating an example of DL reception timings and DL transmission timings of IAB nodes according to Operation Example 2.

[FIG. 12] FIG. 12 is a diagram illustrating hardware configuration examples of the gNB 100, the UE 200, and the IAB node 300.

[FIG. 13] FIG. 13 is a diagram illustrating a configuration example of a vehicle 2001.

DESCRIPTION OF EMBODIMENTS

Hereinafter, an embodiment will be described with reference to the drawings. Note that the same functions and configurations are denoted by the same or similar reference signs, and description thereof will be omitted, as appropriate.

(1) Overall Schematic Configuration of Radio Communication System

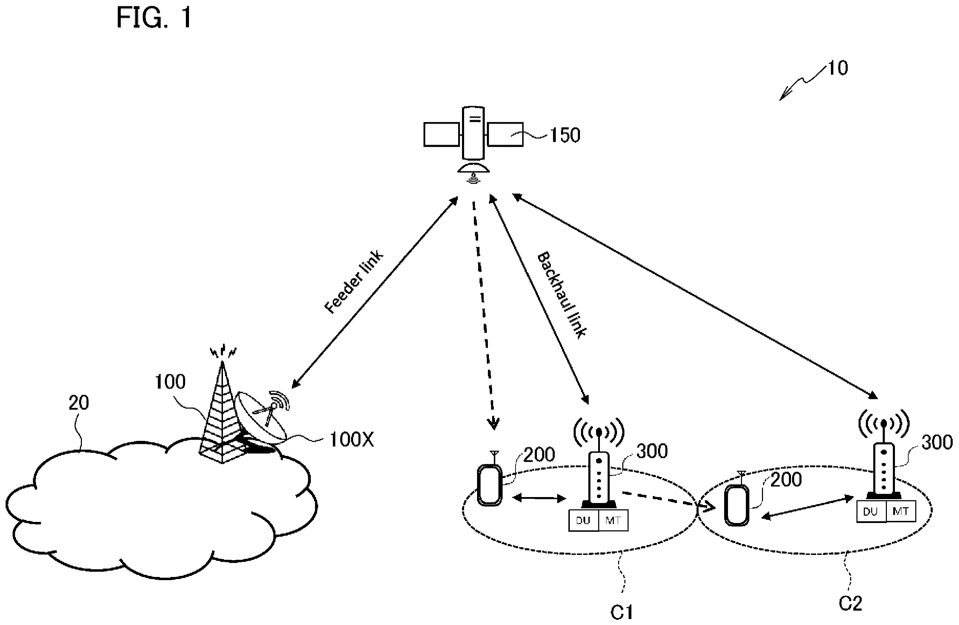

FIG. 1 is an overall schematic configuration diagram of a radio communication system 10 according to this embodiment. The radio communication system 10 is a radio communication system according to 5G New Radio (NR), and includes a next generation-radio access network 20 (hereinafter referred to as NG-RAN 20) and a terminal 200 (hereinafter referred to as user equipment, UE 200).

Note that the radio communication system 10 may be a radio communication system according to a system called Beyond 5G, 5G Evolution, or 6G.

The NG-RAN 20 includes a radio base station 100 (hereinafter referred to as gNB 100). The specific configuration of the radio communication system 10 including the number of gNBs 100 and the number of UEs 200 is not limited to the example illustrated in FIG. 1.

The NG-RAN 20 includes a plurality of NG-RAN nodes, specifically gNBs (or ng-eNBs), and is connected to a core network according to 5G (for example, 5 GC). Note that the NG-RAN 20 and the core network may simply be referred to as "network".

The gNB 100 is a radio base station according to 5G, and performs radio communication with the UE 200 according to 5G. The gNB 100 and the UE 200 can correspond to Massive MIMO (Multiple-Input Multiple-Output), which generates a beam BM with higher directivity by controlling a radio signal transmitted from a plurality of antenna elements, carrier aggregation (CA) using a plurality of component carriers (CC) bundled together, and dual connectivity (DC) simultaneously communicating between the UE and each of two NG-RAN nodes.

In embodiments, the radio communication system 10 may include a non-terrestrial network (hereinafter referred to as Non-Terrestrial Network: NTN). NTNs such as an artificial satellite 150 (hereinafter referred to as satellite 150) are utilized to provide services to areas that cannot be covered by terrestrial networks (hereinafter referred to as TN) due to cost or other reasons. The NTNs can provide more reliable services. For example, the NTNs may be applied to Internet of Things (IoT), ships, buses, trains, and critical communications. The NTNs also have efficient multicast or broadcast scalability.

The satellite 150 may have the function of a relay station device, and the relay method may be either a transparent type or a regenerative type.

It should be noted that a network including the gNB 100 and the UE 200, and not including the satellite 150, may be referred to as the TN in contrast to the NTN. The satellite 150 may have a function of a gNB (radio base station). The type of the satellite 150 is not particularly limited, and may be, for example, a Geostationary Orbit Satellite (GEO) or a Low Earth Orbit satellite (LEO). Alternatively, a High-Altitude Platform Station (HAPS) may be used. The satellite 150 is not necessarily limited to the satellites above, and may be interpreted to include Spaceborne/Airborne.

In this embodiment, the gNB 100 may include an NTN gateway 100X. The NTN gateway 100X transmits a downlink (DL) signal to the satellite 150. The NTN gateway 100X receives an uplink (UL) signal from the satellite 150.

The satellite 150 relays a downlink signal received from the NTN gateway 100X to the UE 200 or the IAB node 300, which provides an integrated access and backhaul (IAB) function. The satellite 150 relays an uplink signal received from the UE 200 or the IAB node 300 to the NTN gateway 100X. The satellite 150 may be interpreted as a transmission-reception point (TRP), or as a repeater or relay.

In this embodiment, the IAB node 300 is installed on the ground, and can be connected to the NTN. The IAB node includes a Mobile Termination (MT) having a function for connecting to a parent node (which may be called an IAB donor), and a Distributed Unit (DU) having a function for connecting to a child node or UE.

The IAB donor (which may be a Parent node) may be called an upper node in relation to the IAB node. Further, the IAB donor may be called a Parent node or vice versa. Further, the IAB donor may include a CU and the parent node may simply be used as a name in relation to the IAB node (or child node). The IAB node may be called a lower node in relation to the IAB donor (Parent node). Further, the child node may include the UE 200. The UE 200 may be called a lower node in relation to the IAB node.

The IAB nodes 300 each forms a cell (which may be called a coverage), specifically, cell C1, C2, and can perform radio communication with the UE 200 in the cell. The IAB node 300 can also perform radio communication with the satellite 150 (and the gNB 100).

The radio link between the NTN gateway 100X and the satellite 150 is called a feeder link (FL), and although not illustrated in FIG. 1, the radio link between the satellite 150 and the UE 200 may be called a service link (SL). The radio link between the satellite 150 and the IAB node 300 may be called a backhaul link.

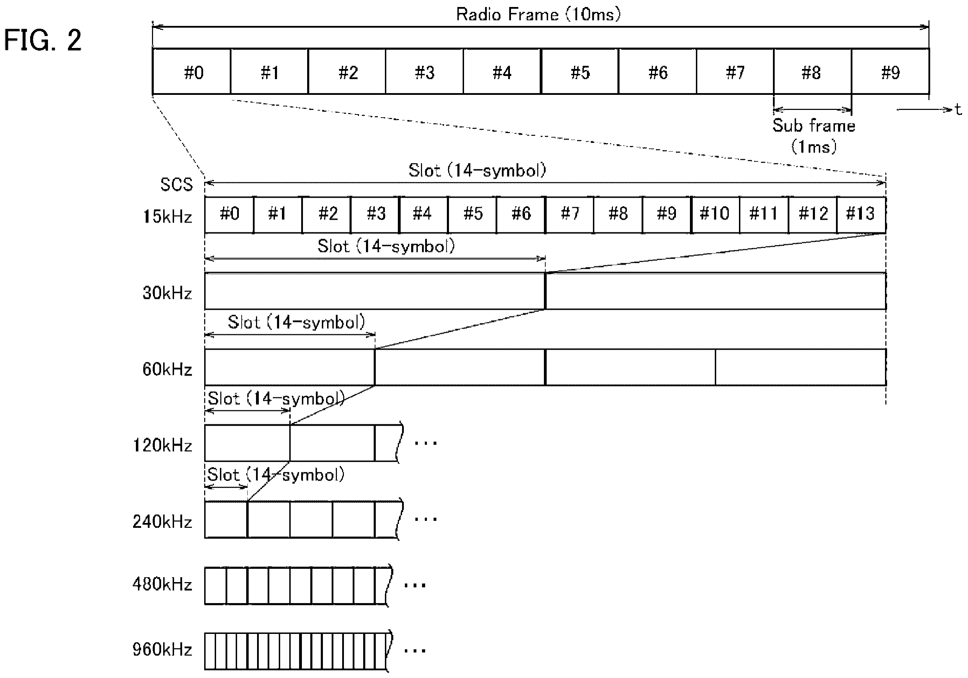

FIG. 2 illustrates a configuration example of radio frames, sub-frames, and slots used in the radio communication system 10.

As illustrated in FIG. 2, one slot consists of 14 symbols, and the larger (wider) the SCS, the shorter the symbol period (and slot period). The SCS is not limited to the intervals (frequencies) illustrated in FIG. 2. For example, 480 kHz or 960 kHz may be used.

Furthermore, the number of symbols constituting one slot is not necessarily 14 symbols (for example, 28 symbols or 56 symbols). Furthermore, the number of slots per sub-frame may be different depending on the SCS.

A time direction (t) illustrated in FIG. 2 may be called a time domain, a symbol period, a symbol time, or the like. A frequency direction may be called a frequency domain, a resource block, a subcarrier, a bandwidth part (BWP), or the like.

(2) Functional Block Configuration of Radio Communication System

Next, a functional block configuration of the radio communication system 10 will be described. Specifically, the functional block configurations of the gNB 100, the UE 200, and the AB node 300 will be described.

(2.1) gNB 100 and UE 200

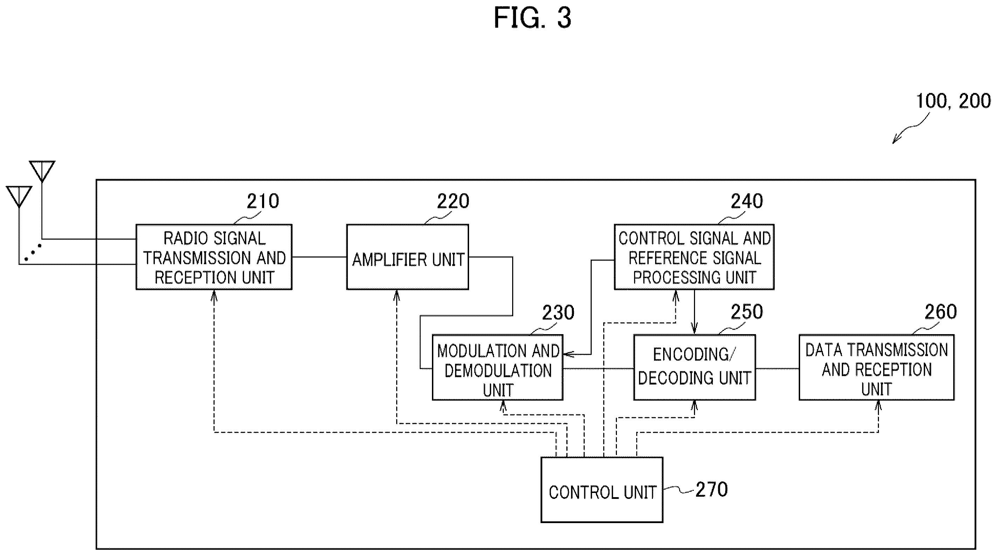

FIG. 3 is a functional block configuration diagram of the gNB 100 and the UE 200. The UE 200 will be described below. As illustrated in FIG. 3, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives a radio signal in accordance with NR. The radio signal transmission and reception unit 210 corresponds to a Massive MIMO, a CA that uses multiple CCs bundled together, and a DC that performs simultaneous communication between the UE and each of two NG-RAN nodes.

An amplifier 220 includes a power amplifier (PA) / low noise amplifier (LNA). The amplifier 220 amplifies a signal output from the modulation and demodulation unit 230 to a predetermined power level. The amplifier 220 also amplifies an RF signal output from the radio signal transmission and reception unit 210.

The modulation and demodulation unit 230 executes data modulation/demodulation, transmission power setting, resource block allocation, or the like, for each predetermined communication destination (such as the gNB 100). cyclic prefix-orthogonal frequency division multiplexing (CP-OFDM) / discrete Fourier transform-spread (DFT-S-OFDM) may be applied to the modulation and demodulation unit 230. DFT-S-OFDM may be used not only for the uplink (UL), but also for the downlink (DL).

The control signal and reference signal processing unit 240 executes processes related to various control signals transmitted and received by the UE 200, and processes related to various reference signals transmitted and received by the UE 200.

Specifically, the control signal and reference signal processing unit 240 receives various control signals transmitted from the gNB 100 via a predetermined control channel, for example, control signals of a radio resource control layer (RRC). Further, the control signal and reference signal processing unit 240 transmits various control signals to the gNB 100 via a predetermined control channel.

The control signal and reference signal processing unit 240 executes processes using reference signals (RS) such as a Demodulation Reference Signal (DMRS) and a Phase Tracking Reference Signal (PTRS).

The DMRS is a known reference signal (pilot signal) between a terminal-specific base stations and terminals for estimating a fading channel used for data demodulation. PTRS is a terminal-specific reference signal for estimating phase noise, which is a problem in high frequency bands.

In addition to the DMRS and the PTRS, the reference signal may include a Channel State Information-Reference Signal (CSI-RS), a Sounding Reference Signal (SRS), and a Positioning Reference Signal (PRS) for positional information.

Further, the channel includes a control channel and a data channel. The control channel may include a PDCCH (Physical Downlink Control Channel), a PUCCH (Physical Uplink Control Channel), a RACH (Downlink Control Information (DCI) that includes Random Access Channel, and Random Access Radio Network Temporary Identifier (RA-RNTI)), and a Physical Broadcast Channel (PBCH).

The data channel may include a Physical Downlink Shared Channel (PDSCH), a Physical Uplink Shared Channel (PUSCH), or the like. Data may mean data transmitted via a data channel.

Data channels include a Physical Downlink Shared Channel (PDSCH) and a Physical Uplink Shared Channel (PUSCH). Data may mean data transmitted via a data channel, or data may mean user data.

The encoding/decoding unit 250 performs data division/concatenation and channel coding/decoding for each predetermined communication destination (the gNB 100 or other gNBs).

Specifically, the encoding/decoding unit 250 divides data output from the data transmission and reception unit 260 into pieces of data in predetermined sizes, and executes channel coding for the divided pieces of data. The encoding/decoding unit 250 decodes data output from the modulation and demodulation unit 230, and concatenates the decoded data.

The data transmission and reception unit 260 performs transmission/reception with a protocol data unit (PDU) and a service data unit (SDU). Specifically, the data transmission and reception unit 260 performs assembling/disassembling of PDUs/SDUs in multiple layers (media access control layer (MAC), radio link control layer (RLC), packet data convergence protocol layer (PDCP), or the like). Further, the data transmission and reception unit 260 performs data error correction and retransmission control based on a Hybrid automatic repeat request (ARQ).

The control unit 270 controls functional blocks that configure the UE 200. In particular, in this embodiment, the control unit 270 can control access to the NTN via the IAB node 300.

Specifically, the control unit 270 can be connected to the DU (second communication unit) of the IAB node 300, and can execute radio communication with the gNB 100 via the NTN (satellite 150).

Note that the communication system between the UE 200 and the IAB node 300 may be half-duplex communication (Half-duplex) or full-duplex communication (Full-duplex). Further, as a multiplexing system, time division multiplexing (TDM), space division multiplexing (SDM), and frequency division multiplexing (FDM) may be available.

Further, the gNB 100 may have a function corresponding to the UE 200 described above. For example, the gNB 100 may have a function of executing radio communication with the UE 200 via the NTN gateway 100X and the satellite 150.

(2.2) IAB Node 300

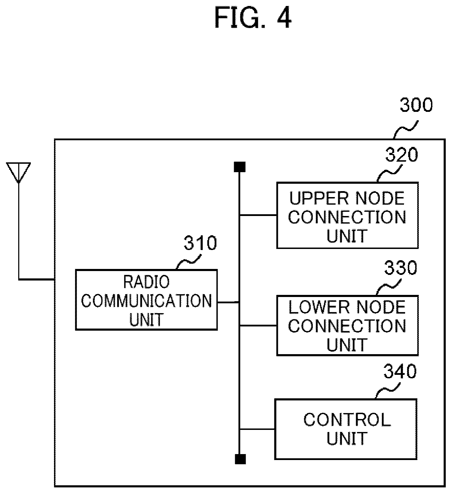

FIG. 4 is a functional block diagram of the IAB node 300. As illustrated in FIG. 4, the IAB node 300 includes a radio communication unit 310, an upper node connection unit 320, a lower node connection unit 330, and a control unit 340.

The radio communication unit 310 transmits and receives radio signals in accordance with the NR. Specifically, the radio communication unit 310 can transmit and receive radio signals to and from the satellite 150 in a specific frequency band (for example, 10 to 14 GHz band (Ku)).

The upper node connection unit 320 provides a function of connecting to the upper node. Specifically, the upper node connection unit 320 can provide a function of Mobile Termination (IAB-MT) of an IAB node, and can connect to the gNB 100 or the satellite 150. The upper node may include other IAB nodes (for example, parent node) in addition to the gNB 100 or the satellite 150.

In this embodiment, the radio communication unit 310 and the upper node connection unit 320 may configure a first communication unit that executes radio communication with an upper node via the non-terrestrial network (NTN).

The lower node connection unit 330 provides a function of connecting to the lower node. Specifically, the lower node connection unit 330 can provide a function of a Distributed Unit (IAB-DU) of an IAB node, and can be connected to the UE 200. In addition to the UE 200, other IAB nodes (for example, a child node) may be included in the lower node.

In this embodiment, a second communication unit that performs radio communication with a lower node may be configured by the radio communication unit 310 and the lower node connection unit 330.

The control unit 340 controls functional blocks that configure the IAB node 300. Specifically, the control unit 340 can adjust the transmission timing and/or the reception timing of the downlink (DL)/uplink (UL) based on the timing alignment value (Timing Advance: TA).

In particular, in this embodiment, the control unit 340 can determine the transmission timing of the downlink to the lower node (UE 200).

Specifically, the control unit 340 may determine the transmission timing based on the time difference (Time Difference) between the reference time (Reference Time) applied to the transmission timing of the DL to the UE 200, and the reception timing of the DL to the upper node connection unit 320 (first communication unit).

Here, the control unit 340 may apply the transmission timing of the DL from the upper node connection unit 320 to the upper node connection unit 320 at a synchronization reference point (ULSRP) of the UL as the reference time. The DL transmission time of the radio signal in the ULSRP and the Time Difference of the radio signal in the IAB-MT may be calculated by one of a plurality of options described below.

Alternatively, the control unit 340 may apply the transmission timing of the DL to the upper node connection unit 320 in the satellite 150 included in the NTN as the reference time. Also in this case, the Time Difference may be calculated by one of a plurality of options described below.

Further, the control unit 340 may determine the transmission timing based on at least one of a common reference time or a common synchronization reference point. For example, the control unit 340 may define the center of an NTN cell (a cell formed by the satellite 150) as a common synchronization reference point, and adjust the DL transmission timing of the lower node connection unit 330 (DU) to the synchronization reference point.

It should be noted that the center of the cell need not be strictly the center as long as it is near the center of the cell to be formed, and a position (sub-satellite point) immediately below the satellite 150 (which may be called a flying object or the like) may be used as a reference.

Further, the control unit 340 may adjust the transmission timing of the DL to the lower node to the reception timing of the DL from the upper node to the lower node in the upper node connection unit 320. Specifically, the control unit 340 can adjust the reception timing of the DL from the gNB 100 in the IAB-MT, and the DL transmission timing from the IAB-DU to the UE 200. More specifically, the control unit 340 may adjust the DL transmission timing to the UE 200 to the reception timing of the DL from the gNB 100 in the IAB-MT.

Further, the control unit 340 may apply a timing alignment value (TA) including at least one of a finer granularity, a shorter effective period, or an alignment cycle when the NTN is used than when the TN is used.

Specifically, in case of transmitting via NTN, the control unit 340 may assume a finer granularity to be applied than parameter values (described below) related to at least one of the common TA (Common TA), and /or UE-specific TA and the Satellite ephemeris.(orbit information) which is applied in the case of transmitting via the TN, for example. Further, the control unit 340 may assume a shorter effective period to be applied to the TA or the like, and a cycle for adjusting (which may be read as updating) the TA may be different from that for using the TN. Specific examples of the granularity and the effective period will be described below.

(3) Operation of Radio Communication System

Next, operation of the radio communication system 10 will be described. Specifically, when the UE 200 is connected to the NTN via the IAB node 300, operation related to mitigation of interference from other IAB nodes or the satellite 150 will be described.

(3.1) Premises and Problems

As described above, in this embodiment, the IAB node 300 is installed on the ground, and the UE 200 can be connected to the NTN (satellite 150) via the IAB node 300. The UE 200 can be connected to the NTN via the IAB node 300 on the ground instead of being directly connected to the NTN, the UE that does not support the NTN can also be targeted, and the coverage throughput of the NTN is improved.

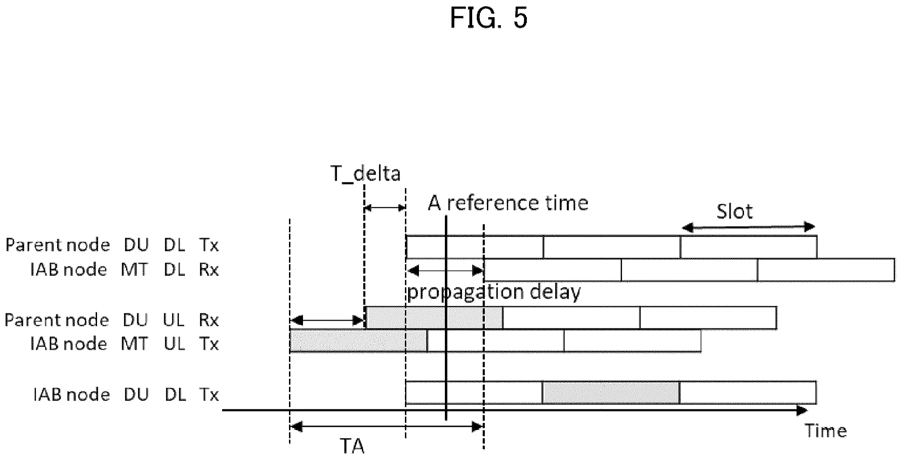

FIG. 5 illustrates an example of timing alignment of DL/UL in the NTN. In 3GPP Release 17 or the like, seven cases are specified with respect to alignment of transmission timing (timing mode) between the parent node and the IAB node.

For example, alignment of transmission timing of downlink (DL) between the IAB node and the IAB donor (Case #1), alignment of transmission timing of DL and UL within the IAB node (Case #2), alignment of reception timing of DL and uplink (UL) within the IAB node (Case #3), and the like are specified. Furthermore, a combination of alignment of transmission timing of DL in Case #1 and transmission timing of UL in Case #2 (Case #6), a combination of alignment of transmission timing of DL in Case #1 and reception timing of UL in Case #3 (Case #7), and the like are also specified.

Regarding timing mode alignment according to Case #1, in the case of TN, the transmission timing of DL is adjusted between the gNB and the IAB nodes, so that interference between DL from the gNB/IAB nodes in the UE can be mitigated.

In 3GPP Release 17, the IAB node can set the same DL transmission timing as that of the parent node by using Timing Advance (TA) and $T_{delta}$ (described below). In $T_{delta}$, a gap between the DL transmission timing in the parent node and the UL reception timing is considered.

However, when connecting to the NTN via the IAB nodes installed on the ground, there are the following problems.

(Problem 1) : In the NTN where IAB nodes are installed on the ground, it is necessary to consider mitigation of interference on the UE side between DLs from a plurality of IAB nodes with overlapping coverage (which may be read as a cell). Specifically, it is necessary to align DL transmission timings among the IAB nodes on the ground.

However, there is no reason to align the regulation contents in the TN, specifically, to align the DL transmission timing of the IAB node and the DL transmission timing of the parent node (which may include an gNB). The DL transmission timing of the IAB node can be adjusted to a new reference time (Reference Time).

(Problem 2) : In NTN where the IAB node is installed on the ground, it is necessary to consider an interference between DL from the gNB and DL from the IAB-DU in addition to the interference between DL from the IAB node with overlapping coverage.

(Problem 3) : In the NTN where the IAB node is installed on the ground, common TA, UE specific TA (UE specific TA), and $T_{TA}$ are generally applied to determine a DL transmission timing of the IAB node.

Therefore, the communication performance between the IAB node and UE may be greatly affected by inaccuracy of the calculation of the TA value. In order to ensure the communication performance between the IAB node and the UE, it is necessary to consider the extension for calculating TA (the common TA and the UE specific TA).

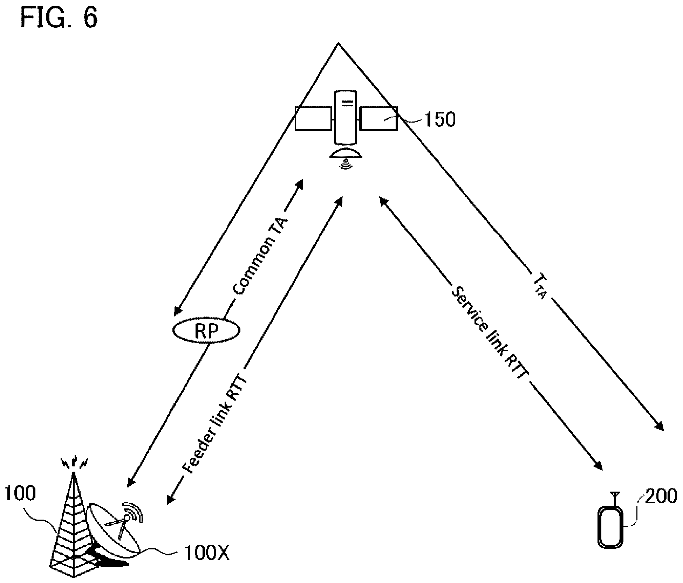

FIG. 6 illustrates an example of the timing relationship between the gNB 100 and the UE 200 when the NTN is used. Specifically, FIG. 6 is similar to the diagram illustrated in 3GPP TS38.300 16.14.2. As illustrated in FIG. 6, the timing relationship may be extended by the common TA and scheduling offset ($k_{offset}$, $K_{mac}$) to accommodate propagation delay in the NTN.

The common TA is a preset offset corresponding to a round-trip time (RTT) between a reference point (RP) and an NTN payload. $k_{offset}$ is a preset scheduling offset which need to be greater than or equal to the sum of a service link RTT and the Common TA. $K_{mac}$ is a preset offset which need to be greater than or equal to the RTT between the RP and the gNB.

$T_{TA}$ is a difference between a reception time in the IAB-MT and a transmission time in the IAB-MT for the transmit timing mode of IAB-MT (Case #6). The $T_{TA}$ is defined by a transmission timing mode (Case #1) in the IAB-MT and a reception mode (Case #7) in the parent node.

(3.2) Operation Example 1

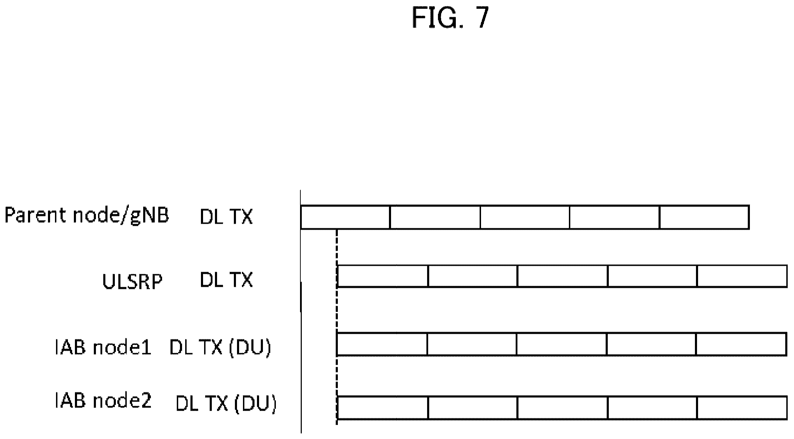

FIG. 7 illustrates an example of the DL transmission timing of the IAB node according to Operation Example 1. Specifically, FIG. 7 illustrates an example of the DL transmission timing of the IAB node adjusted to the ULSRP.

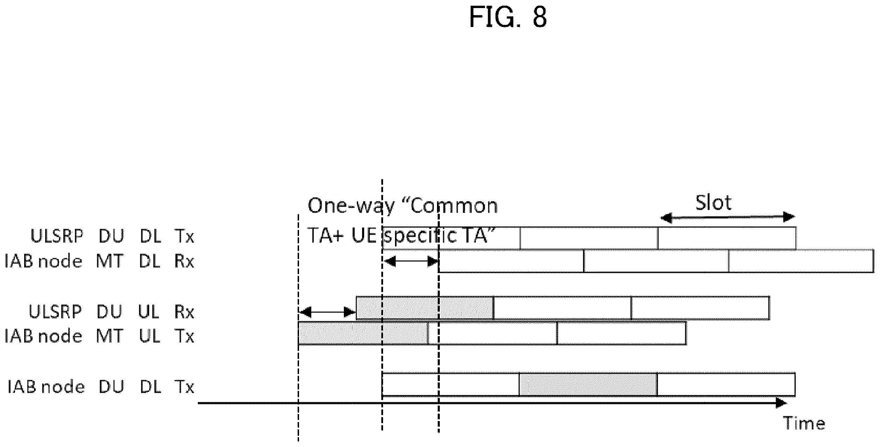

FIG. 8 illustrates an example (Part 1) of timing alignment according to Case #1 in the NTN. Specifically, FIG. 8 illustrates an example of aligning the DL transmission timing of the IAB node with the ULSRP as a reference.

In the case of the IAB node installed on the ground and connected to the NTN, the IAB node may assume the reference time, and the DL transmission timing of the IAB node may be adjusted to the reference time.

The IAB node can determine an IAB-DU DL transmission timing based on a Time Difference between the Reference Time and the MT DL reception time using one of the following reference points (which may be interpreted as RP, or ULSRP).

(Option 1): A Reference Time is a DL transmission time at the ULSRP (see FIG. 6 for the ULSRP). The Time Difference between the DL transmission time at the ULSRP and the DL reception time at the IAB-MT may be calculated according to one of Options 1-1 to 1-5.

(Option 1-1): Conventional (legacy) definitions and formulas are reused. Specifically, the following formula is used in calculation.

[Formula 1]

$$T_{TA}/2 + \left( N_{delta} + T_{delta} \cdot G_{step} - N_{TA,Offset}/2 \right) \cdot T_C$$

$N_{delta}$ and $G_{step}$ may be defined as follows.

$N_{delta} = -70528$ and $G_{step} = 64$ (when a serving cell, to which Timing Delta MAC CE (control element) is provided, is FR1

7

(410 MHz to 7.125 GHz))

$N_{delta} = -17664$ and $G_{step} = 32$ (when the serving cell, to which the Timing Delta MAC CE is provided, is FR2 (24.25 GHz to 52.6 GHz))

The IAB node may assume that index ($T_{delta}$) of the same value is provided by the serving cells of the IAB-MT (Case #7 and Case #1) in a Timing mode.

The Timing Delta MAC CE may include $T_{delta}$ which is used to determine the IAB-DU DL transmission timing of Case #1, and to determine the IAB-DU DL transmission timing alignment and the IAB-MT UL transmission timing alignment of Case #6. $T_C$ is a Basic time unit of NR and is specified in 3GPP TS38.211 4.1.

(Option 1-2): Definition/calculation is made in the following manner.

$$[\text{Formula 2}]$$

$$T_{TA}/2 - N_{TA,Offset}/2 \cdot T_C$$

(Option 1-3): Definition/calculation is made in the following manner.

$$[\text{Formula 3}]$$

$$T_{TA}/2$$

(Option 1-4): Definition/calculation is made in the following manner.

$$[\text{Formula 4}]$$

$$\left( N_{TA,adj}^{common} + N_{TA,adj}^{UE} \right) \cdot T_C/2 + \left( N_{delta} + T_{delta} \cdot G_{step} - N_{TA,Offset}/2 \right) \cdot T_C$$

$$[\text{Formula 5}]$$

$$N_{TA,adj}^{common}, \quad N_{TA,adj}^{UE}$$

is specified in 3GPP TS38.213 4.2.

(Option 1-5): Definition is made in the following manner.

$$[\text{Formula 6}]$$

$$\left( N_{TA,adj}^{common} + N_{TA,adj}^{UE} \right) \cdot T_C/2$$

(Modification): In the option described above,

$$[\text{Formula 7}]$$

$$T_{delta} \text{ or } N_{delta} + T_{delta} \cdot G_{step} \text{ or } \left( N_{delta} + T_{delta} \cdot G_{step} - N_{TA,Offset}/2 \right)$$

may be replaced by a new parameter such as $T_{comp}$ to correct for the corresponding time difference. The IAB node may be instructed to use the new parameter via a network.

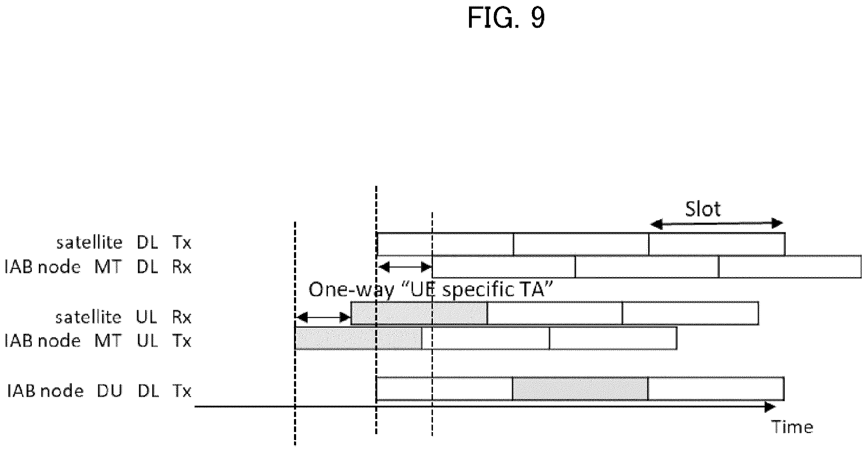

FIG. 9 illustrates an example (part 2) of timing alignment according to Case #1 in the NTN. Specifically, FIG. 9 illustrates an example of aligning the DL transmission timing of the IAB node with respect to the satellite.

(Option 2): The Reference Time is a DL transmission time at satellite 150. The Time Difference between the transmission time of a DL (which may be read as a signal) from satellite 150 and the reception time of the DL by the IAB-MT may be calculated according to one of Options 2-1 to 2-3.

(Option 2-1): Conventional (legacy) definitions and formulas are reused. Specifically, the following formula is used in calculation.

[Formula 8]

$$T_{TA}/2 + \left( N_{delta} + T_{delta} \cdot G_{step} - N_{TA,Offset}/2 \right) \cdot T_c$$

(Option 2-2): Definition/calculation is made in the following manner.

[Formula 9]

$$( N^{UE}_{TA,adj} ) \cdot T_c/2 + (N_{delta} + T_{delta} \cdot G_{step} - N_{TA,Offset}/2) \cdot T_c$$

(Option 2-3): Definition is made in the following manner.

[Formula 10]

$$(N^{UE}_{TA,adj}) \cdot T_c/2$$

(Modification): In the option described above,

[Formula 11]

$$T_{delta} \text{ or } N_{delta} + T_{delta} \cdot G_{step} \text{ or } \left( N_{delta} + T_{delta} \cdot G_{step} - N_{TA,Offset}/2 \right)$$

may be replaced by a new parameter such as $T_{comp}$ to correct for the corresponding time difference. The IAB node may be instructed to use the new parameter via a network.

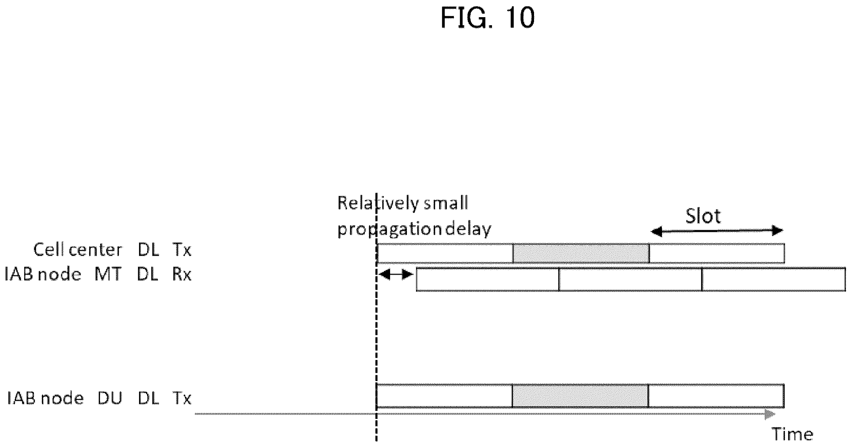

FIG. 10 illustrates an example (Part 3) of timing alignment according to Case #1 in the NTN. Specifically, FIG. 10 illustrates an example of aligning the DL transmission timing of the IAB node with the cell center as a reference.

(Option 3): A common reference time and/or a synchronization reference point for determining a DL transmission timing of the IAB node may be defined.

For example, an NTN cell, that is, a center of a cell formed by the satellite 150, may be defined as a common synchronization reference point, and the IAB node may align the DL transmission timing with the transmission timing at the synchronization reference point.

If the time difference between the common Reference Time in the IAB-MT and the DL reception time in the IAB-MT needs to be extended to the range of $T_{delta}$,

[Formula 12]

$$(N_{delta} + T_{delta} \cdot G_{step}) \cdot T_c$$

is used for the definition/calculation.

(Modification): In the option described above for the IAB node,

[Formula 13]

$$T_{delta} \text{ or } N_{delta} + T_{delta} \cdot G_{step}$$

may be replaced by a new parameter such as $T_{comp}$ to correct for the corresponding time difference. The IAB node may be instructed to use the new parameter via a network.

Further, the Reference Time and/or the synchronization reference point may be defined in advance or the RRC/MAC CE/DCI may be used to instruct the IAB node via a network.

According to the operation example 1, the DL transmission timing of the IAB node 300 (IAB-DU) can be determined based on the time difference (Time Difference) between the reference time (Reference Time) and the DL reception timing of the IAB node 300 (IAB-MT). Further, the ULSRP or the DL transmission timing of the satellite 150 can be applied as the Reference Time. Further, a common Reference Time or SRP can be defined in the NTN cell.

Therefore, the DL transmission timing can be flexibly adjusted, and the interference of DL from a plurality of IAB nodes with overlapping coverage on the UE side can be effectively mitigated.

(3.3) Operation Example 2

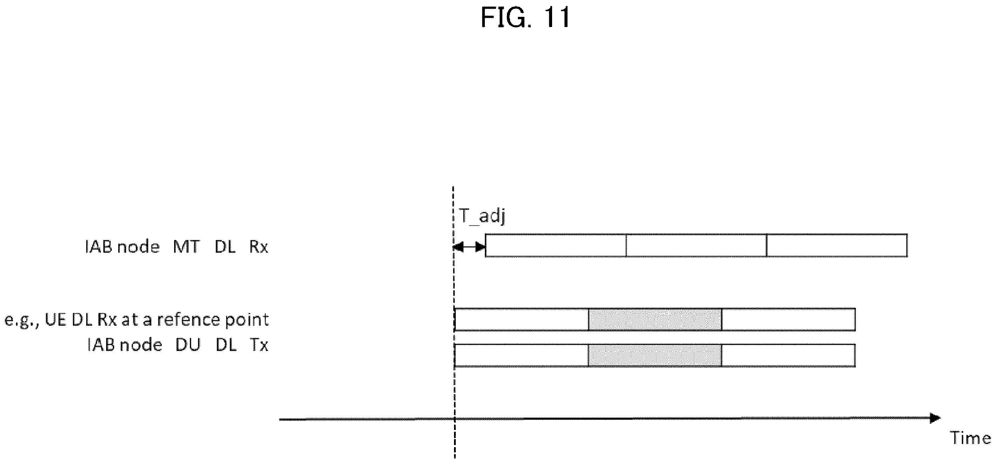

FIG. 11 illustrates an example of a DL reception timing and a DL transmission timing of the IAB node according to Operation Example 2. Specifically, FIG. 11 illustrates an example of the DL reception timing in the IAB-MT, the DL reception timing in the RP of the UE, and the DL transmission timing in the IAB-DU.

In a case of the IAB node installed on the ground and connected to the NTN, the reception time of the DL from the gNB 100 in the IAB-MT, and the DL transmission time of the IAB-DU, may be adjusted in the following manner to avoid interference between the DL from the gNB 100 via the satellite 150 and the DL from the IAB-DU (see the dotted line in FIG. 1).

(Operation Example): At the reference point (RP), the DL transmission timing in the IAB-DU is aligned with the DL reception timing from the gNB 100 to the UE 200 in the IAB-MT.

The IAB node applies $T_{adj}$ to adjust the DL transmission timing of the IAB-DU to be aligned with the DL reception timing from the gNB 100 at the RP.

$T_{adj}$ is a time difference between the reception time of the DL from the gNB 100 that is received at the RP and the reception time of the DL in the IAB-MT. $T_{adj}$ may be instructed to the IAB node via a network.

The RP may be a physical point existing in the NTN cell, for example, the center of the NTN cell or the edge of the NTN cell. The RP may be a virtual point, for example, a point where the TA is maximum ($T_{TA\_max}$) in the NTN cell or a point where a best communication quality (for example, Reference Signal Received Power: RSRP) is obtained in the NTN cell.

(Modification): The DL transmission timing at the IAB-DU may be aligned with the reception timing at the IAB-MT of DL from the gNB 100 via the NTN. In this case, the $T_{adj}$ may be a value of "0" or less, and the reference point may be the IAB-MT.

Note that the common Reference Time (Option 3) in Operation Example 1 corresponds to the "DL reception timing from the gNB at the RP" in this operation example, and may be regarded as a special case of Option 3 in Operation Example 1.

When Options 1 and 2 in Operation Example 1 are applied, another approach for eliminating the interference may be applied. For example, DL transmission from the gNB and DL transmission from the IAB node are performed at different times/in different frequency domains.

According to Operation Example 2, the IAB node 300 can align the DL transmission timing to the UE 200 with the reception timing of the DL from the gNB 100 at the IAB-MT.

Therefore, the DL transmission timing can be flexibly adjusted, so that interference on the UE side between the DL from the gNB (via satellite) and the DL from the IAB node can be effectively mitigated.

(3.4) Operation Example 3

In the case of IAB node installed on the ground and connected to NTN, calculation accuracy of the TA (for example, common TA, UE specific TA) for ensuring communication performance (which may be read as communication quality) between the IAB node and the UE may be maintained in any of the following manners.

(Option 1) : Fine granularity is applied to parameters related to the Common TA and/or the Satellite ephemeris (orbital information).

The common TA is a preset offset corresponding to a Round-Trip Time (RTT) between the reference point (RP) and an NTN payload as illustrated in FIG. 6. Parameters to which finer granularity is applied may include $k_{offset}$ and $K_{mac}$, or Common TA parameters and $T_{TA}$ itself. The Satellite ephemeris may include parameters related to the orbit of satellite 150. Granularity of some or all parameters may be finer than when using the TN.

(Option 2): A short validity period for parameters related to the Common TA and/or the Satellite ephemeris is used.

(Option 2-1): The number of bits for a validity period (in seconds) for ntn-UlSyncValidityDuration-r17 is increased to apply a short validity period. For example, the following values may be added (parenthesized values are to be add).

{(1), (2), (3), 5, (7), 10, (13), 15, (17), 20, (23), 25, (27), 30, ... 60, (90), 120, (150), 180, (210), 240, (600), 900}

ntn-UlSyncValidityDuration-r17 (see 3GPP TS 38.331) is one of Assistance information, and indicates the maximum period for which the UE can apply the Assistance information without obtaining new Assistance information. Assistance information may mean a parameter.

(Option 2-2): The validity period (in seconds) of the new Assistance information for IAB nodes for NTNs located on the ground is defined.

For example, ntn-UlSyncValidityDurationIAB-r19 (which may be a working name) may be defined with the following validity periods.

- {1, 2, 3, 7, 13, 17, 23, 27, ... 90,150, 210, 600}; or
- {1, 2, 3, 5, 7,10, 13, 15, 17, 20, 23, 25, 27, 30, ... 60, 90, 120, 150, 180, 210, 240, 600, 900}

(Option 3): An alignment period of the TA at the IAB node for the NTN installed on the ground is defined.

For example, the IAB node may forcibly adjust (update) the Common TA and the UE-specific TA every X seconds.

$$X = \{1s, 2s, 3s, 5s, 10s, 15s, 20s, 30s, 60s, 120s, 150s\}$$

The value of X may be predefined, or may be instructed to the IAB node via a network using RRC/MAC CE/DCI.

According to the operation example 3, the IAB node 300 can assume a finer granularity to be applied than the parameters values related to at least one of the Common TA and/or the UE-specific TA, or the Satellite ephemeris which is applied in the case of using via the TN. In addition, the IAB node 300 can assume a shorter effective period to be applied to the TA or the like, and the cycle for adjusting the TA may be different from that for using the TN.

Therefore, even when the IAB node is connected to the NTN, a suitable DL transmission timing can be set in a timely manner, and interference on the UE side can be effectively mitigated.

(4) Other Embodiments

The embodiments have been described above. However, it is obvious to those skilled in the art that modifications and improvements are possible without being limited to the descriptions of the embodiments.

For example, in the embodiments described above, a non-terrestrial network (NTN) and a terrestrial network (TN) have been described separately, but the NTN may be interpreted as a network having a relatively larger delay than the TN, or as a network having a relatively longer propagation distance than the TN.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 3 and 4) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

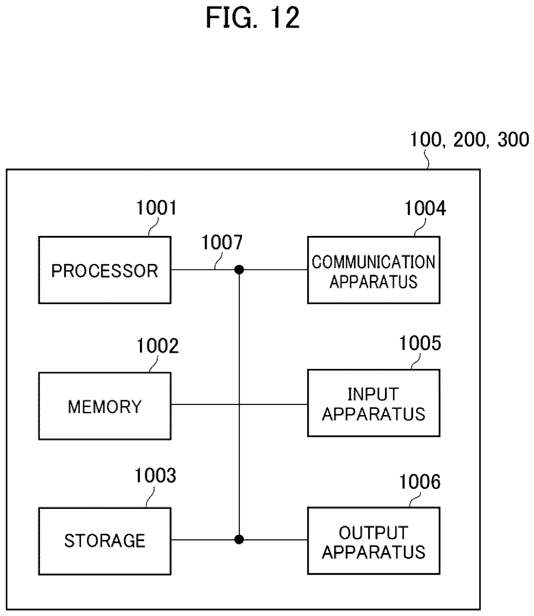

Further, the above-described gNB 100, UE 200 and IAB node 300 (the devices) may function as a computer that performs processing of a radio communication method of the present disclosure. FIG. 12 is a diagram illustrating an example of a hardware configuration of the device. As illustrated in FIG. 12, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIGS. 3 and 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), W-CDM (registered trademark), GSM (registered trademark)), CDMA 2000, Ultra Mobile Broadband (UNM), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." APDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

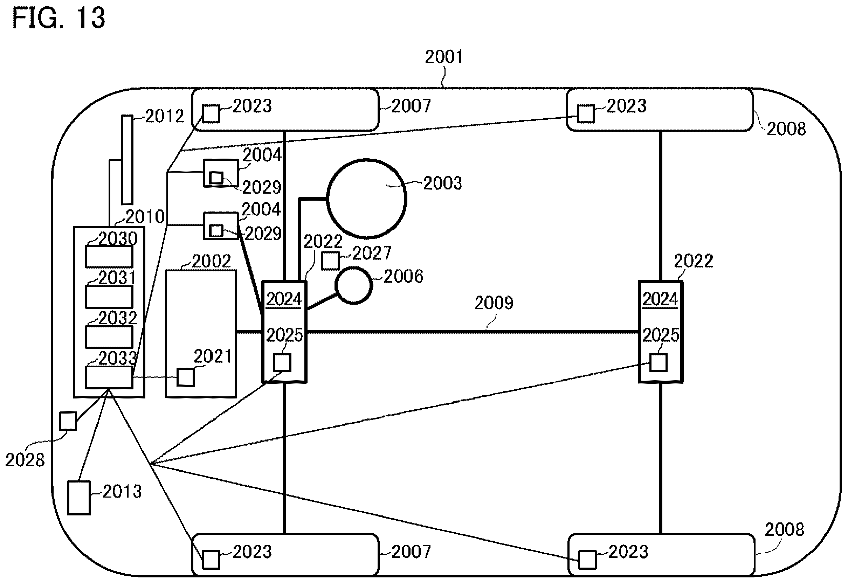

FIG. 13 shows a configuration example of a vehicle 2001. As shown in FIG. 13, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

(Additional Notes)

The disclosure above may be expressed as follows. A first feature provides a radio communication node including: a first communication unit that executes radio communication with an upper node via a non-terrestrial network; a second communication unit that executes radio communication with a lower node; a control unit that determines a transmission timing of a downlink to the lower node. The control unit determines the transmission timing based on a time difference between a reference time applied to the transmission timing and a reception timing of a downlink to the first communication unit.

A second feature is according to the first feature, in which the control unit applies the transmission timing of a downlink to the first communication unit at a synchronization reference point of an uplink from the first communication unit as the reference time.

A third feature is according to the first or second feature, in which the control unit determines the transmission timing based on at least one of a common reference time or a common synchronization reference point.

A fourth feature is according to any one of the first to third features, in which wherein the control unit determines the transmission timing based on at least one of the common reference time or the common synchronization reference point.

A fifth feature is according to any one of the first to fourth features in which the control unit aligns the transmission timing of the downlink to the lower node to a reception timing of the downlink from the upper node to the lower node in the first communication unit.

A sixth feature is a radio communication node including: a first communication unit that executes radio communication with an upper node via a non-terrestrial network; a second communication unit that executes radio communication with a lower node; a control unit that determines a transmission timing of a downlink to the lower node. The control unit applies a timing a alignment value including at least one of finer granularity, a shorter effective period, or a different alignment cycle when the radio communication node passes through the non-terrestrial network than when the radio communication node passes through the terrestrial network.

Reference Signs List

10 Radio communication system
20 NG-RAN
100 gNB
100 NTN gateway

150 Satellite
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
300 IAB node
310 Radio communication unit
320 Upper node connection unit
330 Lower node connection unit
340 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor 2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A radio communication node comprising:

   a first communication unit that executes radio communication with an upper node via a non-terrestrial network;
   a second communication unit that executes radio communication with a lower node; and
   a control unit that determines a transmission timing of a downlink to the lower node, wherein
   the control unit determines the transmission timing based on a time difference between a reference time applied to the transmission timing and a reception timing of a downlink to the first communication unit.

2. The radio communication node according to claim 1, wherein the control unit applies the transmission timing of a downlink to the first communication unit at a synchronization reference point of an uplink from the first communication unit as the reference time.

3. The radio communication node according to claim 1, wherein the control unit applies the transmission timing of a downlink to the first communication unit in a satellite included in the non-terrestrial network as the reference time.

4. The radio communication node according to claim 1, wherein the control unit determines the transmission timing based on at least one of a common reference time or a common synchronization reference point.

5. The radio communication node according to claim 1, wherein the control unit aligns the transmission timing of the downlink to the lower node with a reception timing of the downlink from the upper node to the lower node in the first communication unit.

6. A radio communication node comprising:

   a first communication unit that executes radio communication with an upper node via a non-terrestrial network;
   a second communication unit that executes radio communication with a lower node;
   a control unit that determines a transmission timing of a downlink to the lower node, wherein
   the control unit applies a timing alignment value including at least one of finer granularity, a shorter effective period, or a different alignment cycle when the radio communication node passes through the non-terrestrial network than when the radio communication node passes through the terrestrial network.

FIG. 1

# FIG. 2

Radio Frame (10ms)

| #0 | #1 | #2 | #3 | #4 | #5 | #6 | #7 | #8 | #9 |

Sub frame (1ms)

Slot (14-symbol)

SCS

15kHz: #0 #1 #2 #3 #4 #5 #6 #7 #8 #9 #10 #11 #12 #13

Slot (14-symbol)

30kHz

Slot (14-symbol)

60kHz

Slot (14-symbol)

120kHz ...

Slot (14-symbol)

240kHz ...

480kHz ...

960kHz ...

EP 4 734 620 A1

# FIG. 3

EP 4 734 620 A1

# FIG. 4

300

320

**UPPER NODE CONNECTION UNIT**

310

**RADIO COMMUNICATION UNIT**

330

**LOWER NODE CONNECTION UNIT**

340

**CONTROL UNIT**

# FIG. 5

FIG. 6

EP 4 734 620 A1

# FIG. 7

Parent node/gNB    DL TX

ULSRP    DL TX

IAB node1    DL TX (DU)

IAB node2    DL TX (DU)

FIG. 8

# FIG. 9

satellite DL Tx
IAB node MT DL Rx

One-way "UE specific TA"

satellite UL Rx
IAB node MT UL Tx

IAB node DU DL Tx

Slot

Time

FIG. 10

# FIG. 11

EP 4 734 620 A1

T_adj

IAB node  MT  DL  Rx

e.g., UE DL Rx at a refence point
IAB node  DU  DL  Tx

Time

# FIG. 12

100, 200, 300

1001

**PROCESSOR**

1007

1004

**COMMUNICATION APPARATUS**

1002

**MEMORY**

1005

**INPUT APPARATUS**

1003

**STORAGE**

1006

**OUTPUT APPARATUS**

FIG. 13

EP 4 734 620 A1

## INTERNATIONAL SEARCH REPORT

| International application No. |
| --- |
| **PCT/JP2023/022789** |

**A. CLASSIFICATION OF SUBJECT MATTER**

*H04W 56/00*(2009.01)i; *H04W 16/26*(2009.01)i; *H04W 84/06*(2009.01)i
FI: H04W56/00 130; H04W16/26; H04W84/06

According to International Patent Classification (IPC) or to both national classification and IPC

**B. FIELDS SEARCHED**

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

3GPP TSG RAN WG1-4, SA WG1-4, CT WG1,4

**C. DOCUMENTS CONSIDERED TO BE RELEVANT**

| Category* | Citation of document, with indication, where appropriate, of the relevant passages | Relevant to claim No. |
| --- | --- | --- |
| X | NTT DOCOMO, INC. Further enhancements on NR NTN [online]. 3GPP TSG RAN adhoc_2023_06_RAN_Rel19_WS RWS-230253. 31 May 2023 [retrieved on 29 November 2023], internet: <URL:https://www.3gpp.org/ftp/tsg_ran/TSG_RAN/TSGR_AHs/2023_06_RAN_Rel19_WS/Docs/RWS-230253.zip> pp. 7-9 | 1-6 |
| A | ERICSSON. On UL time and frequency synchronization enhancements for NTN [online]. 3GPP TSG RAN WG1 #106b-e R1-2109928. 01 October 2021 [retrieved on 29 November 2023], internet: <URL:https://www.3gpp.org/ftp/tsg_ran/WG1_RL1/TSGR1_106b-e/Docs/R1-2109928.zip> section 3.1 | 1-6 |
| A | WO 2023/007683 A1 (NTT DOCOMO, INC.) 02 February 2023 (2023-02-02) paragraphs [0018]-[0028], fig. 4, 6 (Family: none) | 1-6 |

☐ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 November 2023** | **12 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)